(19) **Europäisches Patentamt European Patent Office Office européen des brevets**

(11) **EP 4 765 318 A1**

(12) **EUROPEAN PATENT APPLICATION**
published in accordance with Art. 153(4) EPC

(43) Date of publication:
   **24.06.2026   Bulletin 2026/26**

(21) Application number: **25863999.6**

(22) Date of filing: **03.09.2025**

(51) International Patent Classification (IPC):
   *H01M 10/42* (2006.01)   *H01M 4/66* (2006.01)
   *H01M 50/586* (2021.01)   *H01M 50/593* (2021.01)
   *H01M 4/134* (2010.01)   *H01M 4/133* (2010.01)
   *H01M 4/38* (2006.01)   *H01M 4/587* (2010.01)
   *H01M 10/052* (2010.01)   *H01B 3/30* (2006.01)

(52) Cooperative Patent Classification (CPC):
   **H01B 3/12; H01B 3/30; H01M 4/02; H01M 4/133;
   H01M 4/134; H01M 4/38; H01M 4/587; H01M 4/62;
   H01M 4/66; H01M 10/052; H01M 10/0525;
   H01M 10/42; H01M 50/586; H01M 50/593;
   Y02E 60/10**

(86) International application number:
   **PCT/KR2025/013550**

(87) International publication number:
   **WO 2026/054497 (12.03.2026 Gazette 2026/11)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH LA MA MD TN**

(30) Priority:   **03.09.2024   KR 20240119611**

(71) Applicant: **LG Energy Solution, Ltd.
   Seoul 07335 (KR)**

(72) Inventors:
   • **YANG, Gui Eum
     Daejeon 34122 (KR)**
   • **YOO, Houng Sik
     Daejeon 34122 (KR)**
   • **LEE, Jong Won
     Daejeon 34122 (KR)**
   • **SHIN, Gi Chang
     Daejeon 34122 (KR)**
   • **SEOL, Jeong Soo
     Daejeon 34122 (KR)**
   • **LEE, Min Hyung
     Daejeon 34122 (KR)**
   • **KIM, Dong Hyun
     Daejeon 34122 (KR)**
   • **KIM, Sang Min
     Daejeon 34122 (KR)**
   • **MOON, Young Gyu
     Daejeon 34122 (KR)**
   • **JUNG, Yu Jin
     Daejeon 34122 (KR)**
   • **PARK, Min Gu
     Daejeon 34122 (KR)**

(74) Representative: **Plasseraud IP
   104 Rue de Richelieu
   CS92104
   75080 Paris Cedex 02 (FR)**

(54) **INSULATING COMPOSITION, ELECTRODE COMPRISING INSULATING LAYER DERIVED THEREFROM, AND SECONDARY BATTERY COMPRISING SAME**

(57)   In one aspect, the insulating composition is an insulating composition including solids in an amount of 35% by weight or less based on the total weight, wherein the solids include inorganic particles and a polymer material, and the insulating composition has a viscosity of 4,000 mPa·s or more at a shear rate of 0.0251 s$^{-1}$ and a viscosity of 400 mPa·s or less at a shear rate of 251 s$^{-1}$. The insulating composition has low viscosity at high shear rates and high viscosity at low shear rates, thereby providing excellent coating processability and enabling formation of a narrow insulation width by minimizing sliding portions during insulating layer formation, which can prevent the problem of reversal of the positive electrode/negative electrode capacity ratio that may occur due to sliding portions.

## Description

### [Technical Field]

The disclosure describes technology relating to an insulating composition, an electrode including an insulating layer derived therefrom, and a secondary battery including the same.

### [Background Art]

Recently, as technology development and demand for mobile devices have increased, the demand for batteries as an energy source has rapidly increased, and accordingly, research on batteries capable of meeting various requirements has been conducted in various ways. In particular, research on secondary batteries having high energy density and excellent lifetime and cycle characteristics as power sources for such devices is being actively conducted.

The secondary battery includes a positive electrode containing a positive electrode active material capable of lithium ion insertion/extraction, a negative electrode containing a negative electrode active material capable of lithium ion insertion/extraction, and a separator and an electrolyte interposed between the positive electrode and the negative electrode. The positive electrode and negative electrode have a structure in which an electrode active material layer is formed on one surface or both surfaces of an electrode current collector, and recently, technology for forming an insulating layer on the outer portion of the electrode active material layer to improve electrode stability is being developed. By forming an insulating layer on the outer portion of the electrode active material layer, the electrode active material layer can be protected from heat generation occurring during electrode operation, and insulation between electrodes can be enhanced.

Conventional electrode insulating layers were typically formed using binders having insulating properties. However, since binders have poor heat resistance, conventional insulating layers composed of binders suffer from reduced adhesion under high-temperature conditions during battery operation, thereby degrading battery safety. To address this problem, a technology has been proposed for improving the heat resistance of insulating layers by adding inorganic particles to coating compositions for electrode insulation.

Meanwhile, in addition to the basic effects and functions ensuring safety, such as preventing short circuits between electrodes, the electrode insulation layer may also have the function of minimizing sliding portions at the side areas that inevitably occur during electrode slurry coating and drying processes. To minimize such sliding portions, methods for controlling the coating process during insulating composition and slurry coating are being developed. However, controlling process conditions have limitations, and high cost issues arise such as equipment replacement or process modifications. Therefore, development of insulating compositions that can solve these problems is necessary.

### [Disclosure]

### [Technical Problem]

One aspect of the disclosure provides an insulating composition, wherein the viscosity is maintained above a specific value at low shear rates and the viscosity is maintained below a specific value at high shear rates, thereby enabling smooth discharge of the composition from coating equipment while allowing formation of a narrow insulation width due to the thick wet thickness of the insulating layer.

Another aspect of the disclosure provides an electrode including an insulating layer derived from the insulating composition, wherein the insulating layer facilitates thickness implementation and provides high loading capacity, such that even when the electrode composite layer thickness is thick, the insulating width is thin and formation of sliding portions is minimized.

Still another aspect of the disclosure provides a secondary battery including the electrode in which an insulating layer is stably formed even when the loading amount is high, so that high capacity is secured while preventing the problem of reversal of the positive electrode/negative electrode capacity ratio (N/P ratio) due to a sliding portion.

### [Technical Solution]

[1] One aspect provides an insulation composition including solids in an amount of 35% by weight or less based on the total weight, wherein the solids include inorganic particles and a polymer material, and the insulating composition has a viscosity of 4,000 mPa·s or more at a shear rate of 0.0251 s$^{-1}$ and a viscosity of 400 mPa·s or less at a shear rate of 251 s$^{-1}$.

[2] In the composition of [1], the composition may have a viscosity of 5,000 mPa·s or more at a shear rate of 0.0251 s$^{-1}$

and a viscosity of 380 mPa·s or less at a shear rate of 251 s$^{-1}$.

[3] In the composition of [1] and/or [2], the insulating composition may further include clay, wherein the clay may have positive charges and negative charges distributed within particles thereof and is included in an amount of 0.01 to 10 parts by weight based on 100 parts by weight of the solid content, and the polymer material includes a functional group-containing polymer.

[4] In the composition of at least one of [1] to [3], the solids may be included in an amount of 27% by weight or less based on the total weight of the insulating composition.

[5] In the composition of at least one of [1] to [4], the inorganic particles may be included in an amount of 60 to 92 parts by weight based on 100 parts by weight of solid content, and the polymer material may be included in an amount of 5 to 20 parts by weight based on 100 parts by weight of the solids.

[6] In the composition of at least one of [1] to [5], the inorganic particles may include one or more selected from the group consisting of boehmite (AlOOH), aluminum hydroxide ($Al(OH)_3$), magnesium hydroxide ($Mg(OH)_2$), alumina ($Al_2O_3$), and zirconia ($ZrO_2$).

[7] In the composition of at least one of [3] to [6], the functional group-containing polymer may include one or more functional groups selected from the group consisting of carboxyl groups, ester groups, amide groups, and cyano groups.

[8] In the composition of at least one of [1] to [7], the polymer material may further include a binder, and the binder may include one or more selected from the group consisting of styrene-butadiene copolymer, acrylate styrene-butadiene copolymer, acrylonitrile-butadiene copolymer, acrylonitrile-butadiene-styrene copolymer, acrylic rubber, butyl rubber, fluorocarbon rubber, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylene propylene diene copolymer, polyvinylpyridine, chlorosulfonated polyethylene, latex, polyester resin, acrylic resin, phenol resin, epoxy resin, and polyvinyl alcohol.

[9] In the composition of at least one of [3] to [8], the clay may be sheet-shaped particles and may include one or more selected from the group consisting of hectorite, saponite, and bentonite.

[10] In the composition of at least one of [1] to [9], the composition may further include an aqueous solvent.

[11] In the composition of at least one of [1] to [10], the insulating composition may satisfy a viscosity control index (VCI) of 5.10 to 7.60 as defined by Mathematical Formula 1:

[Mathematical Formula 1]

$$VCI = [(1+Wc) \times Ws] / [Wp]$$

In Mathematical Formula 1, Ws is the content (% by weight) of solids included in the insulating composition, Wc is the content (parts by weight) of clay included in the solids of the insulating composition, Wp is the content (parts by weight) of the functional group-containing polymer included in the solids of the insulating composition, wherein Wc and Wp are contents based on 100 parts by weight of solid content, and Ws, Wc, and Wp are dimensionless numbers excluding respective units thereof.

[12] In the composition of at least one of [1] to [11], the composition may further include a hydrophobic additive, wherein the hydrophobic additive may include activated carbon.

[13] Another aspect provides an electrode including: a current collector; an electrode composite layer provided on a portion of the current collector and including an electrode active material; and an insulating layer adjacent to the electrode composite layer and disposed on the current collector provided with no electrode composite layer, wherein the electrode composite layer has a loading amount of 400 mg/25 cm$^2$ or more, and the insulating layer has a maximum width of 2.0 mm or less.

[14] In the electrode of [13], the electrode active material may be a negative electrode active material, and the negative electrode active material may include one or more selected from the group consisting of silicon-based active materials, carbon-based active materials, and silicon-carbon composite active materials.

[15] In the electrode of [13] and/or [14], the electrode may further include a binder and a conductive material.

[16] Still another aspect provides a secondary battery including the electrode of at least one of [13] to [15].

[Advantageous Effects]

The insulating composition according to one aspect of the disclosure maintains viscosity high above a specific value at low shear rates and maintains viscosity low below a specific value at high shear rates, thereby enabling smooth discharge of the composition from coating equipment while allowing the insulating layer to have a thick wet thickness, making it possible to form a narrow insulating width and thus applicable to high-loading electrodes.

The electrode according to another aspect of the disclosure includes an insulating layer derived from the insulating composition, so that the insulating layer facilitates thickness implementation and provides high loading capacity, such that even when the electrode composite layer thickness is thick, the insulating width can be thin and formation of sliding portions can be minimized.

The secondary battery according to still another aspect of the disclosure includes the electrode, so that an insulating layer is stably formed even with a high loading amount, thereby securing high capacity while preventing the problem of reversal of the positive electrode/negative electrode capacity ratio (N/P ratio) due to sliding portions.

**[Modes of the Invention]**

The advantages and features of the disclosure, and methods for achieving them, will become apparent with reference to the embodiments described in detail below together with the accompanying drawings. However, the disclosure is not limited to the embodiments disclosed below but may be implemented in various different forms, and the present embodiments are provided only to make the disclosure of the disclosure complete and to fully inform those skilled in the art to which the disclosure belongs of the scope of the invention, and the disclosure is defined only by the scope of the claims. Like reference numerals refer to like elements throughout the specification.

Unless otherwise defined, all terms used in the disclosure(including technical and scientific terms) may be used with meanings commonly understood by those of ordinary skill in the art to which the disclosure pertains. Also, terms defined in commonly used dictionaries are not to be interpreted ideally or excessively unless clearly and specifically defined otherwise.

The terminology used herein is for the purpose of describing embodiments and is not intended to limit the disclosure. In the disclosure, the singular forms include the plural forms unless the context clearly dictates otherwise. The terms "comprises" and/or "comprising," when used in the disclosure, do not exclude the presence or addition of one or more other components in addition to the stated components.

In the disclosure, when a part is said to include a certain component, this means that it may further include other components rather than excluding other components, unless there is a specific statement to the contrary.

In the disclosure, the description "A and/or B" means A, or B, or A and B.

In the disclosure, "%" means % by weight unless otherwise expressly indicated.

In the disclosure, $D_{50}$ in a particle diameter distribution curve refers to the particle diameter corresponding to 50% of the cumulative volume, and $D_{90}$ in a particle diameter distribution curve refers to the particle diameter corresponding to 90% of the cumulative number in the particle diameter distribution curve. The $D_{50}$ and $D_{90}$ may be measured, for example, using a laser diffraction method. The laser diffraction method may generally measure particle diameters from the submicron region to several millimeters, and results with high reproducibility and high resolution may be obtained.

In the disclosure, each of the insulating composition, electrode, and secondary battery includes one or more of the technical features and/or technical configurations described below, and these technical features and/or technical configurations may be combined in various ways.

**1. Insulating composition**

The insulating composition according to the first aspect is an insulating composition including solids in an amount of 35% by weight or less based on the total weight, wherein the solids include inorganic particles and a polymer material, and the insulating composition has a viscosity of 4,000 mPa·s or more at a shear rate of 0.0251 s$^{-1}$ and a viscosity of 400 mPa·s or less at a shear rate of 251 s$^{-1}$.

The viscosity at each shear rate may be measured at room temperature, for example, 20 °C to 30 °C, 21 °C to 27 °C, 22 °C to 2 5°C, 23 °C to 25 °C, preferably at 23 °C.

In the first aspect, the insulating composition may have a solid content of 35% by weight or less, preferably 33% by weight or less, 30% by weight or less, 27% by weight or less, or 25% by weight or less. The solid content in the insulating composition may be one factor that may determine the viscosity of the composition, and it may be determined by considering the wet thickness during insulating layer formation, the ease of discharge from a coating nozzle, and the content of components that must be included in the insulating layer. However, when the solid content exceeds the above-described range, problems may occur such as nozzle clogging when the insulating composition is discharged from the coating nozzle, or non-uniform coating thickness of the insulating layer, so it is preferable to reduce the solid content within the above-described range as much as possible.

The insulating composition is characterized in that the viscosity according to shear rate is low at high shear and high at low shear. Generally, the insulating composition may be disposed on an uncoated portion on a side of the electrode active material layer on the electrode current collector, thereby achieving effects such as preventing short circuits between electrodes and preventing unnecessary side reactions at electrode terminals. To this end, inorganic particles are included, and a polymer material is included to appropriately dispose the inorganic particles in the insulating layer and maintain their retention capacity. The polymer material may include one or more types to impart various functions to the composition, for example, one that serves as a binder providing binding force and one that serves to implement wet thickness through viscosity increase.

The insulating composition requires efforts to reduce viscosity by lowering the solid content for the ease of discharge from coating equipment during coating and uniformity of insulating layer thickness formation, while efforts to increase viscosity are also necessary to increase the thickness in the wet state after being discharged from the coating equipment to the current collector. To this end, the insulating composition may include a polymer material, and the polymer material includes a functional group-containing polymer.

The functional group-containing polymer may function to increase the viscosity within the composition, and through this, the advantage of facilitating the achievement of wet thickness can be expected. However, when the functional group-containing polymer is added, the viscosity increases, and at this time, the increase in viscosity may cause problems when the insulating composition is discharged from the coating equipment. In addition, clay has both positive charges and negative charges, so it may serve to control the viscosity according to the shear rate together with the functional group-containing polymer.

Therefore, the present inventors propose an insulating composition implementing viscosity properties that maintain the viscosity at as low a level as possible when the composition is discharged from coating equipment and to maintain the viscosity at as high a level as possible on the current collector after being discharged from the equipment.

In one aspect, the insulating composition includes inorganic particles and a polymer material as the solids and has a viscosity of 4,000 mPa·s or more at a shear rate of 0.0251 $s^{-1}$ and a viscosity of 400 mPa·s or less at a shear rate of 251 $s^{-1}$.

The insulating composition is characterized in that the viscosity may be controlled within a specific range according to shear rate. In the case of insulating compositions, low viscosity is required in coating equipment to enable smooth discharge and improve processability, and high viscosity is required when forming an insulating layer on a current collector after being discharged in order to maintain thick wet thickness and form a narrow insulating width. The above-described insulating composition reflects such properties by satisfying the requirements of having a viscosity of 4,000 mPa·s or more at a shear rate of 0.0251 $s^{-1}$ and a viscosity of 400 mPa·s or less at a shear rate of 251 $s^{-1}$, thereby achieving both advantages of ease of discharge during coating and implementation of a thick and narrow insulating layer as described above.

The insulating composition may preferably have a viscosity at a shear rate of 0.0251 $s^{-1}$ of 4,300 mPa·s or more, 4,500 mPa·s or more, 4,700 mPa·s or more, 4,900 mPa·s or more, 5,100 mPa·s or more, or 5,200 mPa·s or more, and 40,000 mPa·s or less, 39,000 mPa·s or less, 38,000 mPa·s or less, 37,000 mPa·s or less, or 36,000 mPa·s or less. In addition, the insulating composition may preferably have a viscosity at a shear rate of 251 $s^{-1}$ of 395 mPa·s or less, 390 mPa·s or less, or 380 mPa·s or less, and 70 mPa·s or more, 80 mPa·s or more, 90 mPa·s or more, 100 mPa·s or more, or 120 mPa·s or more. The viscosity range according to the shear rate is a range for coating processability (ease of discharge from coating nozzle) and implementation of wet thickness of the insulating layer, and it is preferable to control the types and contents of components included in the insulating composition and the solid content to satisfy this range.

In one aspect, the insulating composition may satisfy a viscosity control index (VCI) of 5.10 to 7.60 as defined by Mathematical Formula 1 below.

[Mathematical Formula 1]

$$VCI = [(1+Wc) \times Ws] / [Wp]$$

In Mathematical Formula 1, Ws is the content (% by weight) of solids included in the insulating composition, Wc is the content (parts by weight) of clay included in the solids of the insulating composition, Wp is the content (parts by weight) of the functional group-containing polymer included in the solids of the insulating composition, wherein Wc and Wp are contents based on 100 parts by weight of solid content, and Ws, Wc, and Wp are dimensionless numbers excluding respective units thereof.

The VCI is a parameter that enables satisfaction of respective viscosity ranges at high shear and low shear, and it may provide guidance on how to control the components in the insulating composition and the resulting solid content thereof.

When the VCI is 5.10 or higher, compared to cases where it is lower, the solid content is sufficient while the content of the functional group-containing polymer included in the solids is controlled, and clay is also sufficiently included, and thus the viscosity at high shear rates can be controlled to ensure coating processability.

In addition, when the VCI is 7.60 or lower, compared to cases where it is higher, even when the solid content is low and the clay content is somewhat insufficient, the content of the functional group-containing polymer included in the solids is sufficient, and the viscosity drop at low shear rates can be controlled, and thus the wet thickness of the insulating layer can be sufficiently secured while simultaneously maintaining the viscosity at high shear rates.

The insulating composition may preferably have a VCI of 5.20 or higher, 5.30 or higher, 5.40 or higher, 5.50 or higher, 5.60 or higher, 5.70 or higher, or 5.80 or higher, and also 7.50 or lower, 7.40 or lower, 7.30 or lower, 7.20 or lower, 7.10 or lower, or 7.00 or lower. When the composition satisfies this range, it may be advantageous for satisfying the above-described viscosity ranges for each shear rate.

The insulating composition may induce binding and dissociation of solid particles by electrical attraction by organically controlling the solid content, the introduction and amount of clay having both positive charges and negative charges distributed within particles thereof, and the introduction amount of a functional group-containing polymer capable of ionization into cations and anions. For example, at high shear rates, the external force applied to the functional group-containing polymer and clay in the composition is strong, causing the bonds formed by electrical attraction to dissociate, thereby maintaining relatively low viscosity. In addition, at low shear rates, the applied external force is not strong enough to dissociate the bonds formed by electrical attraction between the two materials, allowing them to function as if cross-linked together, thereby maintaining high viscosity.

Hereinafter, each component will be described in detail.

*1) Clay*

In one aspect, the insulating composition may further include clay, wherein the clay may contain positive charges and negative charges distributed within particles thereof, and it may be included in the insulating composition in an amount of 0.01 to 10 parts by weight based on 100 parts by weight of solids.

The clay may be included in an amount of 0.01 to 10 parts by weight based on 100 parts by weight of solids, which may be a content for achieving the effect of crosslinking the functional group-containing polymer through binding by electrical attraction and for smoothly performing the binding dissociation function at high shear. Preferably, the clay may be included in an amount of 0.05 parts by weight or more, 0.08 parts by weight or more, or 0.1 parts by weight or more, and it may also be included in an amount of 8 parts by weight or less, 5 parts by weight or less, 3 parts by weight or less, 2 parts by weight or less, or 1.5 parts by weight or less.

The clay may be plate-shaped particles, for example, may include a 2:1 type clay mineral having a tetrahedral sheet-to-octahedral sheet ratio of 2:1, and may include two or more stacked layers in which octahedral sheets are positioned between tetrahedral sheets. The clay may have positive charges ($\delta+$) distributed at the edge portions of the sheets on the particle surface and negative charges ($\delta-$) distributed on the surface portions inside the edges of the sheets.

As positive charges and negative charges are distributed in the clay, when it is included together with a polymer material, for example, a functional group-containing polymer, carboxyl groups may be ionized due to the separated and distributed charges within the clay particles, and the separated cations may be adsorbed in the sheet interlayer space, which may also contain water.

Since the ionized carboxyl groups are anions, they may form bonds with the positive charges distributed at the edge portions of the sheets through electrical attraction, for example, bonds through polar interactions or dipole interactions. These bonds may exhibit the same effect as crosslinking bonds between functional group-containing polymer molecules, and binding and dissociation may occur freely and reversibly according to applied external force, and through such reversible dissociation and binding, a desired level of viscosity may be achieved according to shear rate. Such interactions between the clay and the functional group-containing polymer may be more strongly manifested when the solid content is 35% by weight or less, and when the solid content is relatively low, the reversible reactions of binding and dissociation may occur more smoothly.

The clay may have an average particle diameter ($D_{50}$) of 10 nm to 2.0 $\mu$m, and may preferably be 20 nm or greater, 25 nm or greater, or 30 nm or greater, and 1.8 $\mu$m or less, 1.7 $\mu$m or less, or 1.5 $\mu$m or less. At this time, the average particle diameter $D_{50}$ may be measured by the laser diffraction method for a dispersion of 1.1% by weight of the clay dispersed in water.

The clay may be, for example, a smectite-based clay mineral. The clay may preferably include one or more selected from the group consisting of hectorite, saponite, and bentonite. In addition, the hectorite, saponite, and bentonite may be commercially obtained as laponite (BYK), sumecton (Kunimine Industries), and cloisite (BYK), respectively.

*2) Polymer material*

In first aspect, the insulating composition may include a polymer material, and the polymer material includes a functional group-containing polymer. The functional group-containing polymer may include one or more functional groups selected from the group consisting of carboxyl groups, ester groups, amide groups, and cyano groups.

For example, the functional group-containing polymer may include one or more selected from the group consisting of carboxymethyl cellulose, hydroxypropyl methyl cellulose, hydroxypropyl cellulose, diacetyl cellulose, cellulose acetate butyrate, cellulose acetate propionate, cyanoethyl pullulan, cyanoethyl polyvinyl alcohol, cyanoethyl cellulose, and cyanoethyl sucrose. Preferably, the functional group-containing polymer may include one or more selected from the group consisting of carboxymethyl cellulose, hydroxypropyl methyl cellulose, and hydroxypropyl cellulose. The functional group-containing polymer may serve as a thickening agent in the insulating composition.

The polymer material may further include a binder, and as a representative example, the binder may include one or more selected from the group consisting of styrene-butadiene copolymer, acrylate styrene-butadiene copolymer, acrylonitrile-butadiene copolymer, acrylonitrile-butadiene-styrene copolymer, acrylic rubber, butyl rubber, fluorocarbon rubber, polytetrafluoroethylene, polyethylene, polypropylene, ethylene propylene copolymer, polyethylene oxide, polyvinyl pyrrolidone, polyepichlorohydrin, polyphosphazene, polyacrylonitrile, polystyrene, ethylene propylene diene copolymer, polyvinyl pyridine, chlorosulfonated polyethylene, latex, polyester resin, acrylic resin, phenol resin, epoxy resin, and polyvinyl alcohol. Among these, it is preferable to apply styrene-butadiene copolymer, acrylate styrene-butadiene copolymer, acrylonitrile-butadiene copolymer, acrylonitrile-butadiene-styrene copolymer, or a mixture thereof.

The polymer material may be included in the insulating composition in an amount of 5 to 20 parts by weight based on 100 parts by weight of solids, and may preferably be 6 parts by weight or more, 7 parts by weight or more, 8 parts by weight or more, 9 parts by weight or more, or 10 parts by weight or more, and may also be 18 parts by weight or less, 16 parts by weight or less, 15 parts by weight or less or 14 parts by weight or less.

The content may be the combined weight of the binder and the functional group-containing polymer, and the functional group-containing polymer may be 1 part by weight or more, 2 parts by weight or more, 3 parts by weight or more based on 100 parts by weight of solid content, and may also be 8 parts by weight or less, 7 parts by weight or less, and also 6 parts by weight or less. Within this range, the thickening effect of the functional group-containing polymer may have an appropriate influence on the insulating composition, and when outside this range, viscosity control may be difficult at high shear rates or low shear rates. At this time, the binder may include the remainder excluding the content of the functional group-containing polymer within the content range of the polymer material.

_3) Inorganic particles_

In first aspect, the insulating composition includes inorganic particles.

The insulating composition is disposed on the active material layer side of the electrode uncoated portion and has the purpose of preventing high-risk events such as thermal runaway or explosion caused by inter-electrode short circuits when the battery malfunctions, and thus it may be essential to have properties that do not melt and withstand high temperatures well. Accordingly, this problem has been improved by including inorganic particles having heat-resistant properties in the insulating layer, whereas previously only binders were used in the insulating layer.

The inorganic particles may perform the function of increasing heat resistance as their most important role. Since the inorganic particles do not soften or melt even at high temperatures, for example, high temperatures of 900 °C or higher, when such inorganic particles are included in the insulating layer, electrode insulation can be maintained even at very high temperatures.

The inorganic particles may include one or more selected from the group consisting of, for example, boehmite (AlOOH), aluminum hydroxide ($Al(OH)_3$), magnesium hydroxide ($Mg(OH)_2$), alumina ($Al_2O_3$), and zirconia ($ZrO_2$). Preferably, boehmite may be applied, and in this case, there is an advantage that superior heat resistance can be secured while exhibiting excellent dispersibility, so that uniform heat-resistant properties can be obtained throughout the insulating layer, and the presence of hydroxyl groups included in the inorganic particles may provide excellent ability to maintain adhesion even after electrolyte impregnation.

The $D_{50}$ of the inorganic particles may be 0.1 $\mu$m to 5.0 $\mu$m, preferably 0.1 $\mu$m to 3.0 $\mu$m, more preferably 0.3 $\mu$m or more, or 0.5 $\mu$m or more, and it may be 2.0 $\mu$m or less, 1.0 $\mu$m or less, or 5 $\mu$m or less. When the $D_{50}$ of the inorganic particles satisfies the above-described range, aggregation of the inorganic particles in the insulating coating composition during formation of the insulating layer can be minimized, thereby forming an insulating layer having a uniform thickness and surface.

The inorganic particles may be included in an amount of 60 to 92 parts by weight, preferably 65 parts by weight or more, 70 parts by weight or more, or 75 parts by weight or more, and may also be 91 parts by weight or less, 90 parts by weight or less, 89 parts by weight or less, or 88 parts by weight or less, based on 100 parts by weight of the solids in the insulating composition. When the content of the inorganic particles satisfies the above-described range, aggregation of the inorganic particles within the insulating composition can be minimized during formation of the insulating layer, thereby maintaining the viscosity of the composition appropriately and forming an insulating layer having uniform thickness and surface.

*4) Hydrophobic additive*

In first aspect, the insulating composition may further include the hydrophobic additive, and the hydrophobic additive may include activated carbon.

The hydrophobic additive may have a specific surface area (BET) in the range of 700 $m^2/g$ to 3,000 $m^2/g$, and may preferably be 750 $m^2/g$ or greater, 800 $m^2/g$ or greater, 850 $m^2/g$ or greater, 900 $m^2/g$ or greater, or 950 $m^2/g$ or greater, and 2,700 $m^2/g$ or less, 2,500 $m^2/g$ or less, 2,200 $m^2/g$ or less, 2,000 $m^2/g$ or less, 1,800 $m^2/g$ or less, or 1,500 $m^2/g$ or less. When the specific surface area of the hydrophobic additive satisfies the above-described range, it is possible to prevent the problem of the maximum height becoming higher than that of the active material layer when forming the insulating layer.

The hydrophobic additive may be a carbon-based additive, for example, activated carbon. The activated carbon is composed of graphite and may have a porous structure connected by carbon-carbon bonds. The activated carbon has a porous structure with a large specific surface area and thus may achieve high surface tension by adsorbing SBR binder and the like within the pores even in small amounts.

The hydrophobic additive may include one or more of a first additive having a specific surface area of 700 $m^2/g$ to 1,500 $m^2/g$ and a second additive having a specific surface area of 1,500 $m^2/g$ to 3,000 $m^2/g$. For example, the first additive may have a specific surface area of 700 $m^2/g$ to 1,500 $m^2/g$, preferably 1,000 $m^2/g$ to 1,250 $m^2/g$, and an average particle diameter ($D_{50}$) of 25 $\mu m$ to 60 $\mu m$, preferably 35 $\mu m$ to 45 $\mu m$. In addition, the second additive may have a specific surface area of 1,500 $m^2/g$ to 2,200 $m^2/g$, preferably 1,600 $m^2/g$ to 2,100 $m^2/g$, and an average particle diameter ($D_{50}$) of 2 $\mu m$ to 10 $\mu m$, preferably 3 $\mu m$ to 6 $\mu m$.

Various methods may be applied to increase the hydrophobicity of the hydrophobic additive, and for example, the hydrophobicity may be increased by using activated carbon with a high specific surface area, or by heat treatment, for example, heat treatment at a level of 500 °C, or by acid or base treatment.

*5) Others*

The insulating composition may include a solvent, and the solvent may be an aqueous solvent, for example, the aqueous solvent may be water ($H_2O$).

The insulating composition may be substantially non-electrically conductive. For example, the insulating composition may have a volume resistance of 1,000 $\Omega \cdot cm$ or more, or in the range of 1,000 $\Omega \cdot cm$ to 5,000 $\Omega \cdot cm$.

The insulating composition may have a surface tension of 70 mN/m or more. The insulating composition may have a high surface tension when it contains a hydrophobic additive in an appropriate amount, for example, a surface tension of 70 mN/m to 100 mN/m, or 70 mN/m to 80 mN/m.

## 2. Electrode

According to another aspect, there is provided an electrode including: a current collector; an electrode composite layer provided on a portion of the current collector and including an electrode active material; and an insulating layer adjacent to the electrode composite layer and disposed on the current collector provided with no electrode composite layer, wherein the electrode composite layer has a loading amount of 400 mg/25 $cm^2$ or more, and the insulating layer has a maximum width of 2.0 mm or less.

The electrode has the advantage of being able to increase the loading amount despite the narrow width of the insulating layer, thereby enabling high capacity and high energy density. This may be implemented due to the insulating layer being derived from the insulating composition, and the insulating layer may have solid components and content that are substantially the same as those of the solids of the insulating composition.

When an insulating layer is formed using the insulating composition according to the first aspect and/or the second aspect, the insulating layer width may be at most 2.0 mm or less, and preferably may be 1.9 mm or less, 1.8 mm or less, 1.7 mm or less, 1.6 mm or less, or 1.5 mm or less.

While enabling formation of such a narrow width, a thick wet thickness may be formed simultaneously, allowing for the formation of a uniform and thick insulating layer. Therefore, since such an insulating layer can be formed, it can serve as a dam against the electrode slurry, thereby providing the advantage of minimizing the sliding portion.

When the sliding portion is excessively formed, the capacity ratio (N/P ratio) of the positive electrode and the negative electrode may be reversed, which may cause a problem in that lithium ions delivered from the positive electrode may not be accommodated by the negative electrode, resulting in lithium precipitation, and when such precipitation continues, a short circuit may occur, leading to a risk of fire.

However, the electrode according to the fourth aspect can prevent the above-described problems because the sliding portion can be minimized through the insulating layer. In addition, even when the loading amount of the electrode composite layer is increased to make it slightly thicker, the above-described formation of the sliding portion can be minimized, thereby enabling high capacity, and since the width of the insulating layer is narrow, interference during electrode tab welding can be prevented, significantly reducing the possibility of disconnection. This may be said to be an effect resulting from the ability to implement an electrode having a loading amount of 400 mg/25 cm$^2$ or more and a maximum insulating layer width of 2.0 mm or less.

When the maximum value of the insulating layer width is greater than 2.0 mm, there is not only the problem of potential capacity reduction, but also when manufacturing a single stack cell by stacking unit cells, welding between electrode tabs is performed, wherein electrode tabs positioned at various heights are gathered together for welding, and in this process, when the insulating layer width is wide, the electrode tab may fold and cause disconnection. In other words, the electrode according to the fourth aspect means that it can have the effect of preventing electrode tab disconnection problems along with high-loading and high-energy density properties, in that the loading amount is above a specific value and the maximum value of the insulating layer width is 2.0 mm or less.

In addition, the insulating layer may have an average thickness ($D_{ave}$) of 10 $\mu$m to 100 $\mu$m. Preferably, it may be 15 $\mu$m or more, 20 $\mu$m or more, 25 $\mu$m or more, or 30 $\mu$m or more, and may also be 90 $\mu$m or less, 80 $\mu$m or less, 70 $\mu$m or less, 60 $\mu$m or less, or 50 $\mu$m or less.

The types, properties, and contents of the materials constituting the insulating layer, such as the inorganic particles, polymer material, and clay, may be substantially the same as those described in the insulating composition.

In one aspect, the electrode composite layer of the electrode may include an electrode active material and may further include a binder and a conductive material. The electrode active material may be a positive electrode active material or a negative electrode active material, and preferably may be a negative electrode active material, wherein the negative electrode active material may include one or more selected from the group consisting of silicon-based active materials, carbon-based active materials, and silicon-carbon composite active materials.

### 1) Negative electrode

When the electrode is a negative electrode, it includes a negative electrode current collector and a negative electrode composite layer positioned on the negative electrode current collector, and the negative electrode composite layer may include a negative electrode active material, a binder, and a conductive material.

The negative electrode current collector is not particularly limited as long as it has high conductivity without causing chemical changes in the battery, and examples thereof include copper, stainless steel, aluminum, nickel, titanium, heat-treated carbon, copper or stainless steel surface-treated with carbon, nickel, titanium, silver, and the like, aluminum-cadmium alloy, and the like.

The negative electrode current collector may typically have a thickness of 3 $\mu$m to 500 $\mu$m, and preferably may have a thickness of 300 $\mu$m or less, 200 $\mu$m or less, 100 $\mu$m or less, or 80 $\mu$m or less. Fine irregularities may be formed on the surface of the current collector to enhance bonding strength with the negative electrode active material.

The negative electrode current collector may be used in various forms, for example, film, sheet, foil, net, porous body, foam, non-woven fabric, and the like. In addition, as the negative electrode current collector, a metal foil may be used, and a composite film having metal deposited on at least one surface of a resin may be used.

The negative electrode active material may be a compound capable of reversible intercalation and deintercalation of lithium, and examples thereof include carbon materials such as synthetic graphite, natural graphite, Kish graphite, pyrolytic carbon, meso-carbon microbeads, mesophase pitches, petroleum or coal tar pitch derived cokes, mesophase pitch based carbon fiber, graphitized carbon fiber, amorphous carbon, soft carbon, or hard carbon; (semi)metallic materials capable of alloying with lithium such as Si, Al, Sn, Pb, Zn, Bi, In, Mg, Ga, Cd, Si alloys, Sn alloys or Al alloys; (semi)metal oxide materials capable of doping and dedoping lithium such as $SiO_b$ ($0<b\leq2$), $SnO_2$, vanadium oxide, lithium vanadium oxide; heterogeneous composite materials such as Si-C composites or Sn-C composites; or metal lithium thin films, and any one or a mixture of two or more thereof may be used.

Preferably, the negative electrode active material may include one or more selected from the group consisting of silicon-based active materials, carbon-based active materials, and silicon-carbon composite active materials, and more preferably, the carbon-based active material may include one or more selected from the group consisting of synthetic graphite, natural graphite, soft carbon, and hard carbon, the silicon-based active material may include pure Si particles and/or $SiO_b$ ($0<b\leq2$), and the silicon-carbon composite active material may include a Si-C composite. In addition, the negative electrode active material may be a mixed active material including a mixture of two or more of the above-mentioned materials.

The negative electrode active material may be included in an amount of 60% by weight to 99% by weight based on the total weight of the negative electrode active material layer, and may preferably be included in an amount of 70% by weight or more, 80% by weight or more, 85% by weight or more, or 90% by weight or more, and may also be included in an amount of 98% by weight or less, 97% by weight or less, or 95% by weight or less.

The binder is a component that assists in binding between the conductive material, the active material, and the current collector, and may typically be added in an amount of 0.1% by weight to 10% by weight based on the total weight of the negative electrode active material layer, and may be included in an amount of 0.2% by weight or more, 0.3% by weight or more, or 0.5% by weight or more, and may also be included in an amount of 8% by weight or less, or 5% by weight or less. Examples of such binders may include one or more selected from the group consisting of styrene-butadiene copolymer, acrylate styrene-butadiene copolymer, acrylonitrile-butadiene copolymer, acrylonitrile-butadiene-styrene copolymer, acrylic rubber, butyl rubber, fluorocarbon rubber, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylene propylene diene copolymer, polyvinylpyridine, chlorosulfonated polyethylene, latex, polyester resin, acrylic resin, phenol resin, epoxy resin, and polyvinyl alcohol. Among these, one or more selected from the group consisting of styrene-butadiene copolymer, acrylate styrene-butadiene copolymer, acrylonitrile-butadiene copolymer, acrylonitrile-butadiene-styrene copolymer, carboxymethyl cellulose, hydroxypropyl methyl cellulose, hydroxypropyl cellulose, diacetyl cellulose, cellulose acetate butyrate, cellulose acetate propionate, cyanoethyl pullulan, cyanoethyl polyvinyl alcohol, cyanoethyl cellulose, and cyanoethyl sucrose may be included. Preferably, it is desirable to apply carboxymethyl cellulose, hydroxypropyl methyl cellulose, hydroxypropyl cellulose, or a mixture thereof.

The conductive material is a component for further improving the conductivity of the negative electrode active material, and may be added in an amount of 10% by weight or less, preferably 5% by weight or less, 3% by weight or less, 2% by weight or less, or 1% by weight or less, based on the total weight of the negative electrode composite layer, and may also be included in an amount of 0.01% by weight or more, 0.05% by weight or more, 0.08% by weight or more, 0.1% by weight or more, or 0.3% by weight or more. Such conductive materials are not particularly limited as long as they have conductivity without causing chemical changes in the battery, and examples thereof include: graphite such as natural graphite or synthetic graphite; carbon black such as acetylene black, Ketjen black, channel black, furnace black, lamp black, or thermal black; conductive fibers such as carbon fiber and metal fiber; fluorinated carbon; metal powder such as aluminum or nickel powder; conductive whiskers such as zinc oxide or potassium titanate; conductive metal oxides such as titanium oxide; and conductive materials such as polyphenylene derivatives.

The negative electrode composite layer may be prepared by applying and drying a negative electrode slurry composition prepared by dissolving or dispersing the negative electrode active material, and optionally a binder and a conductive material in a solvent, on a negative electrode current collector, or by casting the negative electrode slurry composition on a separate support, and then laminating a film obtained by peeling from the support onto the negative electrode current collector.

*2) Positive electrode*

When the electrode is a positive electrode, it includes a positive electrode current collector and a positive electrode composite layer positioned on the positive electrode current collector, and the positive electrode composite layer may include a positive electrode active material, a binder, and a conductive material.

The positive electrode current collector may be any material having conductivity without causing chemical changes in the battery, and is not particularly limited. For example, the positive electrode current collector may be stainless steel, aluminum, nickel, titanium, calcined carbon, or aluminum or stainless steel surface-treated with carbon, nickel, titanium, silver, or the like.

The positive electrode current collector may typically have a thickness of 3 $\mu$m to 500 $\mu$m, and may preferably have a thickness of 300 $\mu$m or less, 200 $\mu$m or less, 100 $\mu$m or less, or 80 $\mu$m or less. Fine irregularities may be formed on the surface of the current collector to enhance the bonding strength with the positive electrode active material.

The positive electrode current collector may be used in various forms, for example, film, sheet, foil, net, porous body, foam, non-woven fabric, and the like. In addition, as the positive electrode current collector, a metal foil may be used, and a composite film having metal deposited on at least one surface of a resin may be used.

The positive electrode active material is a compound capable of reversible intercalation and deintercalation of lithium and may include a lithium transition metal compound containing one or more selected from the group consisting of nickel (Ni), cobalt (Co), manganese (Mn), and iron (Fe).

For example, it may include a lithium metal oxide containing lithium and one or more metals such as cobalt, manganese, nickel, or aluminum. More specifically, the lithium metal oxide may be lithium-manganese-based oxides (e.g., $LiMnO_2$, $LiMn_2O_4$, etc.), lithium-cobalt-based oxides (e.g., $LiCoO_2$, etc.), lithium-nickel-based oxides (e.g., $LiNiO_2$, etc.), lithium-nickel-manganese-based oxides (e.g., $LiNi_{1-Y}Mn_YO_2$ (0<Y<1), $LiMn_{2-Z}Ni_ZO_4$ (0<Z<2), etc.), lithium-nickel-cobalt-based oxides (e.g., $LiNi_{1-Y1}Co_{Y1}O_2$ (0<Y1<1), etc.), lithium-manganese-cobalt-based oxides (e.g., $LiCo_{1-Y2}MnY_2O_2$ (0<Y2<1), $LiMn_{2-Z1}Co_{Z1}O_4$ (0<Z1<2), etc.), lithium-nickel-manganese-cobalt-based oxides (e.g., $Li(Ni_pCo_qMn_r)O_2$ (0<p<1, 0<q<1, 0<r<1, p+q+r=1) or $Li(Ni_{p1}Co_{q1}Mn_{r1})_2O_4$ (0<p1<2, 0<q1<2, 0<r1<2, p1+q1+r1=2), etc.), or lithium-nickel-cobalt-transition metal (M) oxides (e.g., $Li(Ni_{p2}Co_{q2}Mn_{r2}M_{s2})O_2$ (wherein M is selected from the group consisting of Al, Fe, V, Cr, Ti, Ta, Mg, and Mo, and p2, q2, r2, and s2 are atomic fractions of respective independent elements, where 0<p2<1, 0<q2<1, 0<r2<1, 0<s2<1, p2+q2+r2+s2=1), etc.), lithium iron phosphate oxides (e.g., $Li_{1+a}Fe_{1-x}M_x(PO_{4-b})X_b$ (wherein M is one or more selected from Al, Mg, and Ti, X is one or more selected from F, S, and N, and -0.5≤a≤0.5, 0≤x≤0.5, 0≤b≤0.1), and the like, and any one or two or more of these compounds may be included.

The positive electrode active material may be included in an amount of 80% by weight to 99% by weight based on the total weight of the positive electrode composite layer, and may preferably be included in an amount of 85% by weight or more, 88% by weight or more, 90% by weight or more, 92% by weight or more, 93% by weight or more, or 95% by weight or more, and may also be included in an amount of 98.5% by weight or less, 98% by weight or less, or 97.5% by weight or less. When included within the above-described range, it may be preferable in terms of both increasing electrode capacity and energy density, and optimizing the functions of auxiliary materials such as conductive materials and binders.

The conductive material is a component for further improving the conductivity of the positive electrode active material, and such conductive material is not particularly limited as long as it has conductivity without causing chemical changes in the battery, and examples thereof include: carbon black powder such as acetylene black, ketjen black, channel black, furnace black, lamp black, or thermal black; graphite powder such as natural graphite, artificial graphite, or graphite having highly developed crystal structures; conductive fibers such as carbon fibers or metal fibers; fluorinated carbon powder; conductive powder such as aluminum powder or nickel powder; conductive whiskers such as zinc oxide or potassium titanate; conductive metal oxides such as titanium oxide; and conductive materials such as polyphenylene derivatives. Specifically, for uniform mixing of the conductive material and improvement of conductivity, it may include one or more selected from the group consisting of activated carbon, graphite, carbon black, and carbon nanotubes (CNT).

The conductive material may be included in an amount of 0.1% by weight to 10.0% by weight based on the total weight of the positive electrode composite layer. Preferably, it may be included in an amount of 0.2% by weight or more, 0.3% by weight or more, 0.5% by weight or more, or 0.7% by weight or more, and may also be included in an amount of 8.0% by weight or less, 6.0% by weight or less, or 5.0% by weight or less. While a larger amount of conductive material may be more advantageous for forming conductive pathways, capacity may decrease due to a relative reduction in active material amount. Although it is not easy to control the input amount due to dispersion issues, it may be preferable to apply the conductive material within the above-described range since the effect of conductive pathway formation can be maximized by optimizing dispersibility within the above-described range.

The binder serves to improve adhesion between positive electrode active material particles and adhesion between the positive electrode active material and the current collector. Specific examples thereof include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluorocarbon rubber, polyacrylic acid, and polymers in which hydrogen thereof is substituted with Li, Na, or Ca, or various copolymers thereof, and one or a mixture of two or more thereof may be used.

The binder may be included in an amount of 0.1% by weight to 10.0% by weight based on the total weight of the positive electrode composite layer. Preferably, it may be included in an amount of 0.2% by weight or more, 0.3% by weight or more, 0.5% by weight or more, or 0.7% by weight or more, and may also be included in an amount of 8.0% by weight or less, 6.0% by weight or less, or 5.0% by weight or less.

_3) Method of manufacturing electrode_

The electrode according to the third aspect may be manufactured by the following manufacturing method. The manufacturing method includes: applying an electrode slurry containing an electrode active material to a portion of a current collector (S1a); applying an insulating composition to the current collector in an area adjacent to an area where the electrode slurry is applied but where the electrode slurry is not applied (S1b); and drying the electrode slurry and the insulating composition applied to the current collector to form an electrode composite layer and an insulating layer (S2). In this case, the insulating composition may be according to the first aspect and/or the second aspect.

Step S1a may be carried out according to a conventional electrode manufacturing method. Specifically, it may be carried out by applying an electrode slurry prepared by dissolving or dispersing an electrode active material, a binder, and a conductive material in a solvent onto an electrode current collector, followed by drying and rolling.

Step S1b may also be carried out according to a conventional insulating layer manufacturing method. For example, the insulating composition may be prepared by mixing inorganic particles and a binder in a solvent and performing a dispersion process. Specifically, the particles are added to the solvent and mixed to blend each component of the composition. At this time, the mixing may be performed using mixing devices well known in the art, for example, a homo mixer, and the like, but is not limited thereto.

The composition that has undergone the mixing process is milled to disperse it. The milling may be performed using a ball mill, a bead mill, or a basket mill, and more specifically, may be performed using a bead mill. Meanwhile, the degree of dispersion of the composition may be controlled by adjusting milling conditions such as the number of times the composition is passed through the ball mill, bead mill, or basket mill (hereinafter, "pass number"), rotor speed, and the like.

Steps S1a and S1b may be carried out simultaneously, and may be carried out sequentially before the drying process of Step S2 is carried out. Specifically, a coater having multiple nozzles may be used to simultaneously apply the electrode slurry and the insulating composition onto the current collector, and the electrode slurry coating equipment and the insulating composition coating equipment may be sequentially arranged in the traveling direction of a conveyor so that the process may be designed to allow all coating to be performed before drying.

Step S2 is a drying process to which conditions generally applied in this technical field may be applied, for example, 50 °C to 300 °C, preferably 60 °C or higher, or 70 °C or higher, and drying may also be performed at a temperature of 250 °C or lower, 200 °C or lower, or 150 °C or lower.

The electrode slurry may have a solid content of 40% by weight to 80% by weight, and the content may be appropriately adjusted depending on whether the electrode slurry is a positive electrode slurry or a negative electrode slurry, and preferably, it may be appropriately controlled within a range of 45% by weight to 75% by weight. When the solid content is controlled within the above-described range, mixing of the electrode slurry and the insulating composition may not occur, and the problem of the insulating composition penetrating into the interface between the electrode composite layer and the current collector may not arise.

### 3. Secondary battery

A secondary battery according to another aspect may include the above-described electrode.

Since the electrode is the same as described above, a detailed description thereof is omitted, and only the remaining components will be described in detail below.

The secondary battery may be a lithium secondary battery or a sodium secondary battery, and it may be an all-solid-state secondary battery or a non-aqueous electrolyte secondary battery. When the secondary battery is a non-aqueous electrolyte secondary battery, the secondary battery may optionally further include: a battery container housing an electrode assembly that is an assembly of unit cells including the positive electrode, the negative electrode, and the separator; and a sealing member for sealing the battery container. In addition, when the secondary battery is an all-solid-state secondary battery, a solid electrolyte membrane may be applied instead of the separator.

In the secondary battery, the separator separates the negative electrode and the positive electrode and provides a pathway for lithium ion movement, and any separator commonly used in secondary batteries may be used without particular limitation, and those having low resistance to electrolyte ion movement and excellent electrolyte wetting ability are particularly preferred. Specifically, porous polymer films made of polyolefin-based polymers such as ethylene homopolymer, propylene homopolymer, ethylene/butene copolymer, ethylene/hexene copolymer, and ethylene/methacrylate copolymer, or laminated structures of two or more layers thereof may be used. In addition, conventional porous non-woven fabrics, for example, non-woven fabrics made of high-melting-point glass fibers, polyethylene terephthalate fibers, and the like may also be used. In addition, coated separators containing ceramic components or polymer materials may be used to ensure heat resistance or mechanical strength, and may optionally be used in single-layer or multi-layer structures.

The electrolyte used in the secondary battery may include organic liquid electrolytes or inorganic liquid electrolytes that are available for secondary battery manufacture, but is not limited thereto.

The electrolyte may include an organic solvent and a lithium salt. The organic solvent may be used without particular limitation as long as it may serve as a medium through which ions involved in the electrochemical reaction of the battery may move. Specifically, the organic solvent may include: ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (wherein R is a linear, branched, or cyclic hydrocarbon group having 2 to 20 carbon atoms, and it may include a double bond aromatic ring or ether bond); amides such as dimethylformamide; dioxolanes such as 1,3-dioxolane; or sulfolanes. Among these, carbonate-based solvents are preferred, and a mixture of cyclic carbonates having high ionic conductivity and high dielectric constant that can enhance the charge-discharge performance of the battery (e.g., ethylene carbonate or propylene carbonate) and low-viscosity linear carbonate compounds (e.g., ethyl methyl carbonate, dimethyl carbonate, or diethyl carbonate) is more preferred.

The lithium salt may be used without particular limitation as long as it is a compound capable of providing lithium ions used in secondary batteries. Specifically, the anion of the lithium salt may be one or more selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably used within a range of 0.1 to 2.0 M. When the concentration of the lithium salt is within the above-described range, the electrolyte may exhibit excellent electrolyte performance because it has appropriate conductivity and viscosity, and lithium ions may move effectively.

In addition to the electrolyte components, the electrolyte may further include one or more additives, for the purpose of improving battery lifetime characteristics, suppressing battery capacity reduction, improving battery discharge capacity, and the like, such as haloalkylene carbonate compounds such as difluoroethylene carbonate, pyridine, triethyl phosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. In this case, the additives may be included in an amount of 0.1% to 5% by weight based on the total weight of the electrolyte.

When the secondary battery is an all-solid-state secondary battery, the applicable solid electrolyte may be selected from a solid polymer electrolyte, a gel polymer electrolyte, a solid inorganic electrolyte, and a molten inorganic electrolyte, and the inorganic electrolyte may be a sulfide-based solid electrolyte or an oxide-based solid electrolyte. The specific compound types may be appropriately applied according to what is known in the art.

Since the secondary battery stably exhibits excellent discharge capacity, output characteristics, and capacity retention rate, it can be useful in portable devices such as mobile phones, laptop computers, and digital cameras, and in electric vehicle applications such as hybrid electric vehicles (HEVs).

In another aspect, a battery box including the secondary battery as a unit cell may be provided. The battery box may include a plurality of battery cells that are unit cells, and it may include packaging accommodating the plurality of battery cells. Here, the battery box may be, for example, a battery module or a battery pack.

In addition, in another aspect, an electrical device including the battery box may be provided. The battery box may be used as a power source for the electrical device. The electrical device may be, for example, a power tool; an electric vehicle including an electric vehicle (EV), a hybrid electric vehicle, and a plug-in hybrid electric vehicle (PHEV); or one or more medium-to-large devices of a power storage system.

## Examples

Hereinafter, the disclosure will be described in more detail by way of examples. However, the following examples are intended to illustrate the disclosure, and the scope of the disclosure is not limited thereto.

### Insulating composition

### Examples 1 to 5 and Comparative Examples 1 to 4

Into water as an aqueous solvent, carboxymethyl cellulose (CMC) as a functional group-containing polymer and hectorite (laponite, BYK Co.) as clay having an average particle diameter ($D_{50}$) of 25 nm were added and mixed in a homo mixer (Dispermat LC, VMA Co.) at 2,500 rpm for five minutes. Thereafter, boehmite having a $D_{50}$ of 1.0 $\mu$m and a specific surface area of about 5.0 m$^2$/g to 8.5 m$^2$/g (product name: BP10, manufacturer: KEATON), styrene-butadiene copolymer (SBR), and activated carbon were added to the mixture and mixed at 2,500 rpm for 25 minutes.

Next, an insulating coating composition was prepared by performing a dispersion process using a bead mill (product name: LS-1, manufacturer: Netzsch) under conditions of rotor speed 3300 RPM, 1-pass discharge rate of 540 g/min, and a pass number of 8.

The content of components applied in each Example and Comparative Example (parts by weight based on 100 parts by weight of solid content) is as shown in Table 1 below. The SBR and activated carbon were added at 8 parts by weight and 0.2 parts by weight, respectively, and the amount of water as an aqueous solvent was adjusted so that the solid content was as described in Table 1 below.

[Table 1]

| | Inorganic particles | Carboxymethyl cellulose (CMC) | Clay | Solids (% by weight) | VCI |
|---|---|---|---|---|---|
| Example 1 | 87.8 | 4.0 | 0 | 23 | 5.75 |
| Example 2 | 87.7 | 4.0 | 0.1 | 23 | 6.33 |
| Example 3 | 87.4 | 4.0 | 0.4 | 17 | 5.95 |
| Example 4 | 86.1 | 4.6 | 1.1 | 14 | 6.39 |
| Example 5 | 86.8 | 4.0 | 1 | 11 | 5.50 |
| Comparative Example 1 | 88.3 | 3.5 | 0 | 27 | 7.71 |
| Comparative Example 2 | 88.3 | 3.4 | 0.1 | 25 | 8.09 |

(continued)

|  | Inorganic particles | Carboxymethyl cellulose (CMC) | Clay | Solids (% by weight) | VCI |
|---|---|---|---|---|---|
| Comparative Example 3 | 87.1 | 4.6 | 0.1 | 21 | 5.02 |
| Comparative Example 4 | 86.1 | 5.5 | 0.2 | 20 | 4.36 |

**Experimental Example 1: Evaluation of insulating compositions**

For the insulating compositions prepared in Examples 1 to 5 and Comparative Examples 1 to 4, the isothermal viscosity, viscosity at shear rates of 251 $s^{-1}$ and 0.0251 $s^{-1}$, and surface tension were measured by the following methods and are shown in Table 2 below.

**1) Isothermal viscosity (cP):** Using a temperature-corrected viscometer, when the viscosity was 10,000 cP or less, the isothermal viscosity was measured at room temperature (approximately 25 °C) using 4.2 ml of each composition as a sample with an SC4-16 spindle in an SC4-8RP chamber under conditions of 12 rpm for three minutes, and when the viscosity was 8,000 cP to 30,000 cP, the isothermal viscosity was measured using 16.1 ml of each composition as a sample with an SC4-25 spindle in an SC4-13RP chamber under conditions of 16 rpm for three minutes.

**2) Viscosity by shear rate (mPa·s):** The above-described compositions were introduced as samples to a rheometer with Cup&Bob accessory (HR-20 Rheometer, TA Inc.) to obtain viscosity data by shear rate at room temperature (approximately 23 °C) (utilizing 1st descending values), and among these, the viscosity values at shear rates of 251 $s^{-1}$ and 0.0251 $s^{-1}$ are shown in Table 2 below.

**3) Surface tension (mN/m):** The measurements were conducted using DCA-200 (Dynamic Contact Angle System, SEO) under the following conditions: Motor speed: 15 / Probe type: Ring / Immersion Depth: 4 / Surface Detect Weight: 0.005 / Stabilization Time: 5.

[Table 2]

|  | VCI | Isothermal viscosity | 0.0251 $s^{-1}$ viscosity | 251 $s^{-1}$ viscosity | Surface tension |
|---|---|---|---|---|---|
| Example 1 | 5.75 | 3040 | 6000 | 380 | 71.9 |
| Example 2 | 6.33 | 5180 | 8870 | 370 | 77.2 |
| Example 3 | 5.95 | 4730 | 15600 | 260 | 79.2 |
| Example 4 | 6.39 | 6800 | 33420 | 240 | 82.9 |
| Example 5 | 5.50 | 2280 | 5250 | 120 | 75.4 |
| Example 6 | 7.71 | 3400 | 3200 | 410 | 72.1 |
| Comparative Example 1 | 8.09 | 3620 | 2500 | 330 | 71.8 |
| Comparative Example 2 | 5.02 | 10430 | 14500 | 420 | 79.5 |
| Comparative Example 3 | 4.36 | 12000 | 35400 | 600 | 81.1 |

Referring to Table 2, it can be confirmed that Examples 1 to 5, which satisfy the range according to the VCI value, have a viscosity of 400 mPa·s or less at high shear rate and simultaneously have a viscosity of 4,000 mPa·s or more at low shear rate. However, Comparative Examples 1 and 2, which do not satisfy the VCI value, particularly those having a VCI value greater than 7.60, show relatively high viscosity at high shear rate despite low viscosity measured at low shear rate, indicating that they would fail to satisfy both the coating processability and wet thickness of the insulating layer that are intended to be resolved simultaneously. Comparative Examples 3 and 4, which have a VCI value less than 5.10, satisfied the viscosity value at low shear rate to some extent, but it can be inferred that problems may arise in coating processability due to high viscosity at high shear rate.

**Experimental Example 2: Evaluation of insulating layer width**

Using the insulating compositions prepared in Examples 1 to 5 and Comparative Examples 1 to 4, simultaneous coating was performed in a slot die using equipment having a plurality of coating nozzles together with a negative electrode slurry on a copper current collector, thereby manufacturing electrodes. At this time, the loading amount of the negative electrode composite layer was 400 mg/25 cm$^2$, the average thickness was approximately 180 $\mu$m, and the insulating layer thickness was set to a wet thickness of 150 μm and dry thickness of 15 μm to measure the maximum value of the insulating layer width.

[Table 3]

|  | Insulation layer width (mm) |
|---|---|
| Example 1 | 2.0 |
| Example 2 | 1.5 |
| Example 3 | 1.3 |
| Example 4 | 1.3 |
| Example 5 | 2.0 |
| Comparative Example 1 | 2.5 |
| Comparative Example 2 | 2.2 |
| Comparative Example 3 | 2.2 |
| Comparative Example 4 | 2.5 |

Referring to Table 3, it can be confirmed that Examples 1 to 5 have an insulation width formed to be less than 2.0 mm, whereas Comparative Examples 1 to 4 have an insulation width formed to be greater than 2.0 mm, indirectly confirming that high loading and high energy density electrodes could not be achieved.

**Claims**

1. An insulating composition comprising solids in an amount of 35% by weight or less based on the total weight,

   wherein the solids include inorganic particles and a polymer material, and
   the insulating composition has a viscosity of 4,000 mPa·s or more at a shear rate of 0.0251 s$^{-1}$ and a viscosity of 400 mPa·s or less at a shear rate of 251 s$^{-1}$.

2. The composition of claim 1, wherein the composition has a viscosity of 5,000 mPa·s or more at a shear rate of 0.0251 s$^{-1}$ and a viscosity of 380 mPa·s or less at a shear rate of 251 s$^{-1}$.

3. The composition of claim 1, further comprising clay, wherein the clay has positive charges and negative charges distributed within particles thereof and is included in an amount of 0.01 to 10 parts by weight based on 100 parts by weight of the solid content, and the polymer material includes a functional group-containing polymer.

4. The composition of claim 1, wherein the solids are comprised in an amount of 27% by weight or less based on the total weight of the insulating composition.

5. The composition of claim 1, wherein the inorganic particles are comprised in an amount of 60 to 92 parts by weight based on 100 parts by weight of solid content, and the polymer material is included in an amount of 5 to 20 parts by weight based on 100 parts by weight of the solids.

6. The composition of claim 1, wherein the inorganic particles comprise one or more selected from the group consisting of boehmite (AlOOH), aluminum hydroxide (Al(OH)$_3$), magnesium hydroxide (Mg(OH)$_2$), alumina (Al$_2$O$_3$), and zirconia (ZrO$_2$).

7. The composition of claim 3, wherein the functional group-containing polymer comprises one or more functional groups selected from the group consisting of carboxyl groups, ester groups, amide groups, and cyano groups.

8. The composition of claim 1, wherein the polymer material further comprises a binder, and the binder includes one or more selected from the group consisting of styrene-butadiene copolymer, acrylate styrene-butadiene copolymer, acrylonitrile-butadiene copolymer, acrylonitrile-butadiene-styrene copolymer, acrylic rubber, butyl rubber, fluorocarbon rubber, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylene propylene diene copolymer, polyvinylpyridine, chlorosulfonated polyethylene, latex, polyester resin, acrylic resin, phenol resin, epoxy resin, and polyvinyl alcohol.

9. The composition of claim 3, wherein the clay is sheet-shaped particles and comprises one or more selected from the group consisting of hectorite, saponite, and bentonite.

10. The composition of claim 1, further comprising an aqueous solvent.

11. The composition of claim 1, wherein the insulating composition satisfies a viscosity control index (VCI) of 5.10 to 7.60 as defined by Formula 1:

$$[\text{Formula 1}]$$

$$\text{VCI} = [(1+\text{Wc}) \times \text{Ws}] / [\text{Wp}]$$

In Formula 1, Ws is the content (% by weight) of solids included in the insulating composition, Wc is the content (parts by weight) of clay included in the solids of the insulating composition, Wp is the content (parts by weight) of the functional group-containing polymer included in the solids of the insulating composition, wherein Wc and Wp are contents based on 100 parts by weight of solid content, and Ws, Wc, and Wp are dimensionless numbers excluding respective units thereof.

12. The composition of claim 1, further comprising a hydrophobic additive, wherein the hydrophobic additive includes activated carbon.

13. An electrode comprising:

a current collector;
an electrode composite layer provided on a portion of the current collector and including an electrode active material; and
an insulating layer adjacent to the electrode composite layer and disposed on the current collector provided with no electrode composite layer,
wherein the electrode composite layer has a loading amount of 400 mg/25 cm$^2$ or more, and the insulating layer has a maximum width of 2.0 mm or less.

14. The electrode of claim 13, wherein the electrode active material is a negative electrode active material, and the negative electrode active material includes one or more selected from the group consisting of silicon-based active materials, carbon-based active materials, and silicon-carbon composite active materials.

15. A secondary battery comprising the electrode of claim 13.

## INTERNATIONAL SEARCH REPORT

International application No.

**PCT/KR2025/013550**

### A. CLASSIFICATION OF SUBJECT MATTER

**H01M 10/42**(2006.01)i; **H01M 4/66**(2006.01)i; **H01M 50/586**(2021.01)i; **H01M 50/593**(2021.01)i; **H01M 4/134**(2010.01)i; **H01M 4/133**(2010.01)i; **H01M 4/38**(2006.01)i; **H01M 4/587**(2010.01)i; **H01M 10/052**(2010.01)i; **H01B 3/30**(2006.01)i

According to International Patent Classification (IPC) or to both national classification and IPC

### B. FIELDS SEARCHED

Minimum documentation searched (classification system followed by classification symbols)

H01M 10/42(2006.01); H01M 10/052(2010.01); H01M 10/52(2006.01); H01M 4/13(2010.01); H01M 4/58(2010.01); H01M 50/409(2021.01); H01M 50/417(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 이차 전지(secondary battery), 절연(insulation), 전단 속도(shear rate), 점도 (viscosity)

### C. DOCUMENTS CONSIDERED TO BE RELEVANT

| Category* | Citation of document, with indication, where appropriate, of the relevant passages | Relevant to claim No. |
|---|---|---|
| Y | KR 10-2024-0002213 A (LG ENERGY SOLUTION, LTD.) 04 January 2024 (2024-01-04) <br> paragraphs [0052]-[0200] and figure 1 | 1-15 |
| Y | KR 10-2018-0116078 A (SUMITOMO CHEMICAL CO., LTD.) 24 October 2018 (2018-10-24) <br> paragraphs [0008], [0032], [0036], [0067], [0071] | 1-12 |
| Y | KR 10-2024-0058793 A (LG ENERGY SOLUTION, LTD.) 03 May 2024 (2024-05-03) <br> paragraph [0019] | 13-15 |
| Y | KR 10-2023-0142247 A (SAMSUNG SDI CO., LTD.) 11 October 2023 (2023-10-11) <br> paragraphs [0041]-[0044], [0133], [0150] | 3,7,9,11 |
| A | KR 10-2023-0106989 A (LG ENERGY SOLUTION, LTD.) 14 July 2023 (2023-07-14) <br> claims 1-14 | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2025** | **02 December 2025** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

## INTERNATIONAL SEARCH REPORT
### Information on patent family members

International application No.

**PCT/KR2025/013550**

| Patent document cited in search report | | | Publication date (day/month/year) | Patent family member(s) | | | Publication date (day/month/year) |
|---|---|---|---|---|---|---|---|
| KR | 10-2024-0002213 | A | 04 January 2024 | CN | 118648129 | A | 13 September 2024 |
| | | | | EP | 4447141 | A1 | 16 October 2024 |
| | | | | JP | 2025-504461 | A | 12 February 2025 |
| | | | | KR | 10-2762256 | B1 | 07 February 2025 |
| | | | | WO | 2024-005527 | A1 | 04 January 2024 |
| KR | 10-2018-0116078 | A | 24 October 2018 | JP | 2018-181833 | A | 15 November 2018 |
| | | | | JP | 7220023 | B2 | 09 February 2023 |
| | | | | KR | 10-2382785 | B1 | 06 April 2022 |
| | | | | US | 2018-0301679 | A1 | 18 October 2018 |
| KR | 10-2024-0058793 | A | 03 May 2024 | CN | 118974975 | A | 15 November 2024 |
| | | | | EP | 4496041 | A1 | 22 January 2025 |
| | | | | JP | 2025-514732 | A | 09 May 2025 |
| | | | | KR | 10-2773510 | B1 | 04 March 2025 |
| | | | | US | 2025-0260010 | A1 | 14 August 2025 |
| | | | | WO | 2024-091019 | A1 | 02 May 2024 |
| KR | 10-2023-0142247 | A | 11 October 2023 | CN | 119096394 | A | 06 December 2024 |
| | | | | KR | 10-2885285 | B1 | 11 November 2025 |
| | | | | US | 2025-0219162 | A1 | 03 July 2025 |
| | | | | WO | 2023-191185 | A1 | 05 October 2023 |
| KR | 10-2023-0106989 | A | 14 July 2023 | CN | 116802829 | A | 22 September 2023 |
| | | | | EP | 4266401 | A1 | 25 October 2023 |
| | | | | EP | 4266401 | A4 | 29 January 2025 |
| | | | | JP | 2024-505452 | A | 06 February 2024 |
| | | | | JP | 7658670 | B2 | 08 April 2025 |
| | | | | US | 2024-0088453 | A1 | 14 March 2024 |
| | | | | WO | 2023-132531 | A1 | 13 July 2023 |

Form PCT/ISA/210 (patent family annex) (July 2022)